# EUROPÄISCHE PATENTSCHRIFT

(11) **EP 2 061 683 B1**
(45) Veröffentlichungstag und Bekanntmachung des Hinweises auf die Patenterteilung: **26.12.2012**
(21) Anmeldenummer: 07802827.1
(22) Anmeldetag: 23.08.2007
(51) Int. Cl.: B60T 8/52, F16D 65/14

(54) **SELBSTVERSTÄRKENDE HYDRAULISCHE BREMSE**
SELF-ENERGIZING HYDRAULIC BRAKE
FREIN HYDRAULIQUE À AUTORENFORCEMENT

(30) Priorität: 15.09.2006 DE 102006044022
(43) Veröffentlichungstag der Anmeldung: 27.05.2009
(73) Patentinhaber: SIEMENS AKTIENGESELLSCHAFT, 80333 München (DE)
(72) Erfinder: STAMMEN, Christian, 59439 Holzwickede (DE); SCHIFFERS, Toni, 41812 Erkelenz (DE)
(86) Internationale Anmeldenummer: PCT/EP2007/058767
(87) Internationale Veröffentlichungsnummer: WO 2008/031701

(56) Entgegenhaltungen:
- US-A- 3 700 075
- US-A- 5 036 960

## Beschreibung

Die Erfindung betrifft eine Vorrichtung zum Bremsen einer bewegten Masse mit einem beweglich geführten Kopplungsglied zum Andrücken eines Bremsbelages an eine Bremsfläche und einem mit Hydraulikflüssigkeit befüllten und mit dem Kopplungsglied verbundenen Bremsaktor zum Erzeugen einer Andruckkraft, die über das Kopplungsglied in den Bremsbelag einleitbar ist, wobei der Bremsbelag über Verbindungsmittel mit einem an einem Gestell der zu bremsenden Masse befestigbaren Druckgeber verbunden ist, der einen mit Hydraulikflüssigkeit befüllten Abstützzylinder und einen mit diesem zusammenwirkenden Abstützkolben aufweist, wobei der Abstützzylinder über Hydraulikleitungen mit dem Bremszylinder kommuniziert und wobei Regelungsmittel eine Bremskraft in Abhängigkeit eines vorgegebenen Sollwerts einstellen.

Eine solche Vorrichtung ist aus der US 3 700 075 A bereits bekannt. Die dort gezeigte Vorrichtung weist eine Selbstservovorrichtung und eine Drehmomentabfühleinrichtung auf. An einem Fahrerhauptzylinder erzeugter Arbeitsmitteldruck wird zu einer Einlasskammer der Selbstservovorrichtung geführt und über eine Druckmittelauslassbohrung zu einer Scheibenbremse übertragen. Bei Anlegen der Scheibenbremse übt das Reaktionsmoment der Scheibenbremse einen Schub auf einen Kolben der Drehmomentabfühleinrichtung aus. Hierdurch wird in der Drehmomentabfühleinrichtung ein Arbeitsmitteldruck erzeugt und dieser Arbeitsmitteldruck wird auf eine Schubkammer der Selbstservovorrichtung übertragen, die derart mit der Einlasskammer verbunden ist, dass ein Teil des in der Drehmomentabfühleinrichtung erzeugten Arbeitsmitteldruckes auf die Scheibenbremse übertragen wird und eine zwangsläufige Rückkopplungsschleife hervorgerufen ist.

Weiterhin ist aus der DE 34 41 128 A1 bereits eine Vorrichtung bekannt, die einen Bremsaktor aufweist, der einen mit Hydraulikflüssigkeit befüllten Bremszylinder umfasst, wobei ein in den Zylinder hineinragendes Bewegteil mit einem Bremsauslöser zum Andrücken eines Bremsbelages an eine Bremsscheibe vorgesehen ist. Der Bremsaktor ist Teil eines Bremssattels, der auf einem Teilkreis beweglich geführt ist. Tangential zum Teilkreis ist eine Zylinderbohrung als Abstützzylinder vorgesehen, wobei in dem Abstützzylinder ein Abstützkolben hineinragt, der an einem Fahrgestell einer zu bremsenden Masse abgestützt ist. Wird der Hydraulikdruck in dem Bremszylinder erhöht, werden die Bremsbeläge an eine sich in Fahrtrichtung drehende Bremsscheibe gedrückt. Es kommt zum Reibschluss und somit zu einer Bewegung des Bremssattels tangential zur Drehrichtung der Bremsscheibe, wobei der an dem Fahrgestell abgestützte und in den Abstützzylinder hineinragende Abstützkolben tiefer in Abstützzylinder hinein bewegt wird. Der Abstützzylinder ist mit einer Hydraulikflüssigkeit befüllt, deren Druck erhöht wird. Der Abstützzylinder ist über eine Hydraulikleitung mit dem Bremszylinder verbunden, so dass es zu einer fest vorgegebenen Kraftverstärkung kommt.

Die GB 1,019,982 beschreibt eine Vorrichtung mit einem innerhalb einer Bremsscheibe angeordneten Spreizglied als Bremsauslöser, der zum Andrücken eines Bremsbelages an eine Bremsscheibe vorgesehen ist. Dabei ist das Spreizglied schwenkbar gelagert. Es wird aufgrund der im Bremsfall auftretenden Verzögerungskraft in Abhängigkeit der Drehrichtung der Bremsscheibe verschwenkt. Dabei ist das Spreizglied und somit der Bremsbelag über Hydraulikleitungen mit einem an dem Gestell einer zu bremsenden Masse befestigten Druckgeber verbunden, der einen Abstützzylinder und einen in den Abstützzylinder hineinragenden Abstützkolben aufweist. Durch das Verschwenken des Spreizgliedes wird der Abstützkolben in den Abstützzylinder hinein verschoben, wodurch die Hydraulikflüssigkeit des Abstützzylinders mit Druck beaufschlagt wird. Der Abstützzylinder ist über Hydraulikleitungen mit einem weiteren Spreizglied verbunden.

Die DE 43 04 905 A1 beschreibt eine auf rein mechanischen Prinzipien basierende selbstverstärkende Bremse.

Die DE 15 30 869 beschreibt ein hydraulisches Bremssystem mit einem Bremsaktor, der über einen Bremsauslöser mit einem Bremsbelag verbunden ist. Ferner ist ein zusätzlicher Druckgeber in Form einer Zylinderbohrung vorgesehen, wobei die Zylinderbohrung mit einer Hydraulikflüssigkeit befüllt ist, und die Hydraulikflüssigkeit nach dem Reibschluss zwischen Bremsscheibe und Bremsbelag von einem Stößel komprimiert wird. Durch diese Kompression verstärkt sich die Bremskraft in dem Bremsaktor, so dass es zu einer Bremsverstärkung kommt.

Die US 5 036 960 A offenbart eine Vorrichtung, bei der ein Bremsbelag über Verbindungsmittel mit einem Abstützzylinder eines hydraulischen Zylindermittels verbunden und ein Abstützkolben des hydraulischen Zylindermittels an einem Gestell der zu bremsenden Masse befestigt ist.

Aufgabe der Erfindung ist es, eine Vorrichtung der eingangs genannten Art (US 3 700 075 A) bereitzustellen, die eine verbesserte kontrollierte Bremsung unabhängig von einer Betätigungskraft ermöglicht.

Die Erfindung löst diese Aufgabe dadurch, dass der Abstützzylinder des Druckgebers durch den Abstützkolben in eine Abstützkammer und in eine Abstützrückholkammer unterteilt, wobei die Regelungsmittel zum Regeln des Druckunterschiedes zwischen dem Hydraulikdruck in der Abstützkammer und dem Hydraulikdruck in der Abstützrückholkammer eingerichtet sind. Hierdurch sind eine Selbstverstärkung der Bremsung und deren gleichzeitige Regelung in beiden Fahrtrichtungen möglich. Dieser Vorteil ist insbesondere bei Fahrzeugen als zu bremsende Masse, die in der Regel in beide Richtungen fahren, von Bedeutung.

Im Rahmen der Erfindung sind Regelungsmittel vorgesehen, die trotz der Selbstverstärkung eine genaue Regelung der Bremsung ermöglichen. Erfindungsgemäß ist die Vorgabe eines Sollwertes vorgesehen, mit dem beispielsweise die Stärke der Bremsung bestimmbar ist. Die Bremsung erfolgt daher im Rahmen der Erfindung nicht mehr in Abhängigkeit der Muskelkraft eines Benutzers. Im Rahmen der Erfindung ist stattdessen das Vorgeben eines Sollwertes beispielsweise unter Einsatz elektrischer Hilfsmittel möglich. Der Sollwert ist beispielsweise veränderbar und wird vom Gewicht der zu bremsenden Masse hergeleitet. Auf diese Weise lassen sich vorhersagbare und genaue Bremsungen durchführen. Die zu bremsende Masse ist beispielsweise ein Kraftfahrzeug, ein Schienenfahrzeug, eine Maschine oder dergleichen.

Zweckmäßigerweise ist der Bremsbelag über die Verbindungsmittel mit dem Abstützzylinder verbunden, wobei der Abstützkolben am Gestell befestigt ist. Diese Variante der Erfindung ermöglicht eine besonders kompakte Herstellung der erfindungsgemäßen Vorrichtung, da sämtliche mit Hydraulikflüssigkeit befüllten Zylinder und Leitungen beispielsweise zu einem Bauteil zusammengefasst werden können. Insbesondere ist eine gemeinsame Herstellung dieser Bauteile ermöglicht. Lediglich der Abstützkolben beziehungsweise die sich vom Abstützkolben aus dem Abstützzylinder herauserstreckende Abstützstange ist mit ihrem freien vom Abstützkolben abgewandten Ende am Gestell der zu bremsenden Masse zu befestigen.

Gemäß einer hiervon abweichenden Ausgestaltung der Erfindung ist der Bremsbelag über die Verbindungsmittel mit dem Abstützkolben verbunden, wobei der Abstützzylinder am Gestell befestigt ist.

Vorteilhafterweise sind in dem Abstützzylinder Druckfedern angeordnet. Die Druckfedern bewirken bei Druckabfall ein Zurückwandern des Abstützkolbens in eine Normalstellung. Wäre der Abstützkolben beim Einleiten einer Bremsung beispielsweise bereits in der Nähe einer Abschlusswand des Abstützzylinders angeordnet, bestünde die Gefahr eines Bremsausfalles, da der Abstützkolben vom Bremsbelag gegen die Abschlusswand gepresst werden könnte.

Zweckmäßigerweise sind in der Abstützkammer und in der Abstützrückholkammer Druckfedern vorgesehen, wobei ein Druckgeberrückstellventil zum Druckausgleich zwischen der Abstützkammer und der Abstützrückholkammer vorgesehen ist und wobei eine Steuerungseinheit den Druckausgleich durch das Druckgeberrückstellventil und die Druckfedern einleitet. Gemäß dieser vorteilhaften Weiterentwicklung ist das Überführen des Druckgebers in seine Normalstellung auch dann möglich, wenn der Abstützzylinder ein zwei Kammern aufweisender Zylinder ist. Dabei sorgt das Druckgeberrückstellventil für einen Druckausgleich zwischen der Abstützkammer und der Abstützrückholkammer, wobei die in den jeweiligen Kammern angeordneten Druckfedern für eine entsprechende Verschiebung des Abstützkolbens innerhalb des Abstützzylinders sorgen. Befindet sich der Abstützkolben wieder in seiner Ausgangsstellung, die vorteilhafterweise die Mittelstellung ist, kann ein erneuter Bremsvorgang ohne die Gefahr eingeleitet werden, dass der Abstützkolben an einer Begrenzungswand des Abstützzylinders anschlägt und ein folgenschwerer Bremsfehler auftritt.

Vorteilhafterweise umfassen die Regelungsmittel Druckerfassungsmittel zum Erfassen eines Druckdifferenzwertes als Istwert, einen Vergleicher, der einen vorgegebenen Sollwert mit dem Istwert unter Gewinnung eines Differenzwertes vergleicht, eine Regelungseinheit und eine Bremsventil zum Einstellen des Druckes der Hydraulikflüssigkeit in dem Bremsaktor, wobei die Regelungseinheit so auf das Bremsventil wirkt, dass der Differenzwert minimiert wird.

Die Druckerfassungsmittel sind beispielsweise als Druck-Spannungsumsetzer oder Druck-Stromumsetzer derart realisiert, dass bei dem Einsatz von Zylindern, die zwei Kammern auf unterschiedlichen Seiten des Kolbens innerhalb des Zylinders aufweisen, zwei Druck-Spannungs- oder Druck-Stromumsetzer zum Bilden des Druckdifferenzwertes dienen, wobei jeder Umsetzer in einer Kammer angeordnet ist. Der Differenzwert der Umsetzer oder mit anderen Worten der Istwert wird anschließend einem Vergleicher zugeführt, der den Istwert mit einem vorgegebenen Sollwert vergleicht. Der Sollwert wird beispielsweise von einem Fahrzeugführer, einer Sicherheitseinrichtung oder von einer übergeordneten Steuerung vorgegeben. Der Vergleicher erzeugt einen Differenzwert aus dem Istwert und dem Sollwert, wobei eine dem Vergleicher nachgeschaltete Regelungseinheit zum Minimieren des Differenzwertes eingerichtet ist. Dabei umfasst die Regelungseinheit einen zweckmäßigen Regler, der auf das Bremsventil einwirkt. Das Bremsventil ist zum Einstellen des Druckes der Hydraulikflüssigkeit vorzugsweise in dem Bremsaktor eingerichtet. Der Druck der Hydraulikflüssigkeit im Bremsaktor bestimmt die Andruckkraft, die über das Kopplungsglied in den Bremsbelag eingeleitet wird. Dabei ist die eingeleitete Andruckkraft, mit welcher der Bremsbelag gegen die Bremsscheibe gedrückt wird, im Wesentlichen rechtwinklig zur besagten Bremsscheibe ausgerichtet.

Gemäß einer diesbezüglich zweckmäßigen Weiterentwicklung wirkt das Bremsventil mit einem fluidischen Hochdruckkreis und einem fluidischen Niederdruckkreis zusammen.

Das Bremsventil kann beispielsweise ein einziges analoges Bremsventil sein oder mehrere analoge Bremsventile umfassen. Abweichend davon umfasst das Bremsventil eine Vielzahl von digitalen Bremseinheiten, wobei jede Bremseinheit zwei Schaltstellungen aufweist.

Gemäß einer bevorzugten Ausgestaltung ist das Bremsventil ein analoges Schieberventil, wobei die Regelungseinheit ein Analogregler oder ein digitaler Regler mit analogen oder pulsmodulierten Ausgang ist. Das Schieberventil weist beispielsweise zwei Ausgänge auf, die an die beiden Kammern eines Zylinders angelegt werden können. Eingangsseitig ist das Schieberventil mit den Hydraulikleitungen und vorteilhafterweise mit einem Hochdruckkreis und einem Niederdruckkreis verbunden. Der Druckunterschied im Zylinder wird durch die mechanische Stellung eines mechanisch verschiebbaren Schiebeteils bestimmt. Dabei können beliebige Druckdifferenzen erzeugt werden, die innerhalb der eingangsseitigen Druckdifferenz beispielsweise zwischen einem fluidischen Niederdruckkreis und einem fluidischen Hochdruckkreis liegen. Darüber hinaus ist es im Rahmen der Erfindung auch möglich, dass das analoge Schieberventil nur einen einzigen Ausgang aufweist, wobei der Bremsaktor über lediglich eine Kammer verfügt. Am Ausgang des Schieberventils sind beliebige Drücke innerhalb der Druckdifferenz zwischen eingangsseitig anliegenden Hochdruck- und Niederdruckkreisen einstellbar. Das Schieberventil ist beispielsweise durch elektromagnetisch erzeugte Kräfte ansprechbar. Vorteilhafterweise ist das Schieberventil ein Proportionalventil.

Gemäß einer hiervon abweichenden Ausgestaltung der Erfindung umfasst das Bremsventil eine Reihe von Schaltventilen mit zwei Schaltstellungen, wobei die Regeleinheit eine digitale Regeleinheit oder eine analoge Regeleinheit mit digitalem Umsetzer ist. Gemäß dieser Ausgestaltung besteht das Bremsventil aus einer Reihe von Zwei-Stellungsschaltventilen, wobei jedes Zwei-Stellungsschaltventil eingangsseitig mit dem fluidischen Hochdruckkreis und dem fluidischen Niederdruckkreis verbunden ist oder mit anderen Worten kommuniziert. Ausgangsseitig ist jedes Schaltventil mit dem Bremsaktor verbunden. Der Druck im Bremsaktor ist daher quasi digital einstellbar. Hierbei werden die Zwei-Stellungsschaltventile von der Steuerungseinheit beispielsweise im Millisekundentakt geschaltet.

Vorteilhafterweise umfasst das Kopplungsglied eine Hebelmechanik. Gemäß dieser zweckmäßigen Weiterentwicklung ist der Bremsbelag nicht durch eine einfache Schubstange mit dem Bremskolben des Bremsaktors verbunden. Vielmehr wird die vom Bremsaktor erzeugte Bremsbewegung im Zuge der Hebelmechanik in den Bremsbelag eingeleitet, bis es zum Eingriff des Bremsbelages in die Bremsscheibe und somit zum Reibschluss zwischen diesen beiden Bauteilen kommt.

Gemäß einer vorteilhaften Weiterentwicklung umfasst der Bremsaktor einen mit Hydraulikflüssigkeit befüllten Bremszylinder und einen Bremskolben, die relativ zueinander beweglich sind. Abweichend von dieser üblichen Ausgestaltung des Bremsaktors sind jedoch im Rahmen der Erfindung auch andere Bremsaktoren, die dem Fachmann als solche bekannt sind, einsetzbar.

Zweckmäßigerweise ist der Bremskolben fest mit dem Kopplungsglied verbunden.

Gemäß einer bevorzugten Ausgestaltung der Erfindung wird der Bremszylinder durch den Bremskolben in eine Bremskammer und in eine Bremsrückholkammer unterteilt. Der Bremszylinder ist mit anderen Worten als Differenzialzylinder ausgestaltet. Die sich einstellende Bremskraft ist daher im Wesentlichen von dem Druckunterschied zwischen Bremskammer und Bremsrückholkammer abhängig.

Gemäß einer weiteren vorteilhaften Ausgestaltung der Erfindung umfasst das Kopplungsglied eine Bremsstange, die sich durch die Bremsrückholkammer erstreckt. Gemäß dieser vorteilhaften Weiterentwicklung der Erfindung wird bei Druckgleichheit zwischen Bremskammer und Bremsrückholkammer aufgrund der größeren Fläche des Bremskolbens in der Bremskammer eine höhere Kraft in der Bremskammer erzeugt, so dass der Bremskolben bei Druckgleichheit aus seiner Mittenstellung hinaus verschoben wird. Dies ist beispielsweise zum Einleiten einer Sicherheitsbremsung bei Druckausfall vorteilhaft. Hinzu kann die Wirkung einer Vorspannfeder treten.

Gemäß einer vorteilhaften Weiterentwicklung der Erfindung ist eine Vorspannfeder zum Andrücken des Bremsbelags an die Bremsscheibe vorgesehen. Die Anordnung der Vorspannfeder ist im Rahmen der Erfindung grundsätzlich beliebig. Liegt kein Druck in den Hydraulikleitungen vor, bleibt der Bremsbelag von der Kraft der Vorspannfeder gegen die Bremsscheibe gedrückt.

Vorteilhafterweise sind ein Hochdruckbehälter, der Teil eines Hochdruckkreises ist, und ein Niederdruckbehälter, der Teil eines Niederdruckkreises ist, zum Bereitstellen von Hydraulikflüssigkeit vorgesehen.

Das Bremsventil ist zweckmäßigerweise mit dem Hochdruckkreis und dem Niederdruckkreis verbunden und zum Erzeugen beliebiger Drücke im Bremsaktor vorgesehen, wobei die erzeugbaren Drücke im Bereich der Druckdifferenz zwischen Hochdruckkreis und Niederdruckkreis liegen. Hierzu ist zweckmäßigerweise jeder Hochdruckbehälter und jeder Niederdruckbehälter jeweils mit einem Rückschlagventil und einer Drossel ausgerüstet. Übersteigt der Druck im Hochdruckbehälter beziehungsweise im Niederdruckbehälter den Druck im Hochdruckkreis beziehungsweise im Niederdruckkreis wird über die Drossel Hydraulikflüssigkeit von dem jeweiligen Druckbehälter in den Hydraulikkreis nachgeführt, so dass stets eine ausreichende Menge an Hydraulikflüssigkeit zur Verfügung steht. Das Laden der Speicher kann über das Rückschlagventil schnell und mit geringem Druckverlust erfolgen. Durch geeignete Wahl von Drossel und Rückschlagventil kann die Dynamik des Lade-/Entladevorgangs für die Anwendung optimiert werden.

Weitere zweckmäßige Ausgestaltungen und Vorteile der Erfindung sind Gegenstand der nachfolgenden Beschreibung von Ausführungsbeispielen der Erfindung unter Bezug auf die Figuren der Zeichnung, wobei gleiche Bezugszeichen auf gleich wirkende Bauteile verweisen und wobei
- Figur 1: ein erstes Ausführungsbeispiel der erfindungsgemäßen Vorrichtung und
- Figur 2: ein zweites Ausführungsbeispiel der erfindungsgemäßen Vorrichtung zeigen.

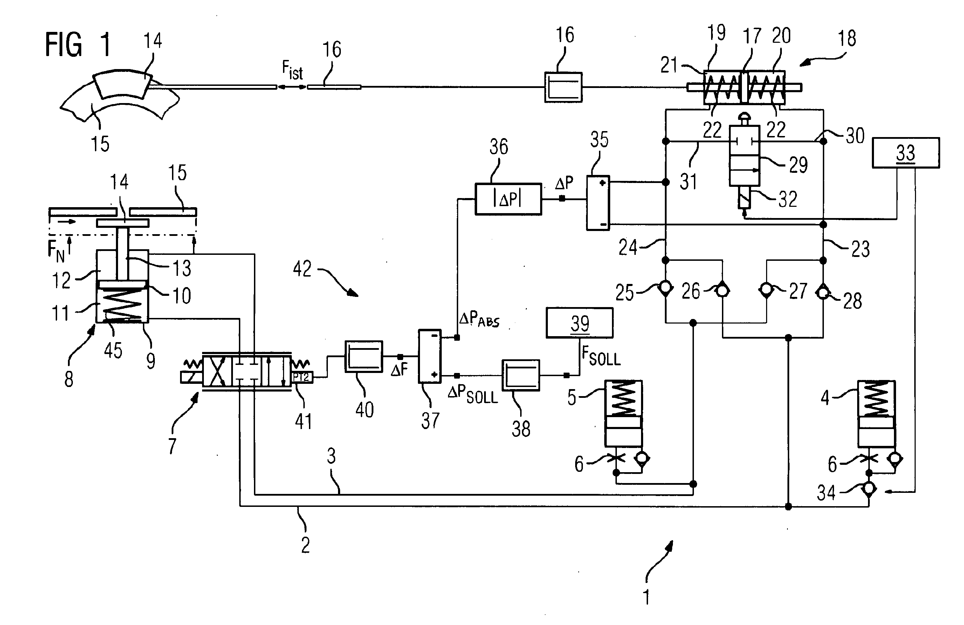

Figur 1 zeigt ein erstes Ausführungsbeispiel der erfindungsgemäßen Vorrichtung 1 in einer schematischen Darstellung. Die erfindungsgemäße Vorrichtung 1 umfasst einen Hochdruckkreis 2 sowie einen Niederdruckkreis 3, die jeweils mit einem Hochdruckbehälter 4 beziehungsweise mit einem Niederdruckbehälter 5 kommunizieren. Der Hochdruckbehälter 4 und der Niederdruckbehälter 5 sind jeweils mit einer Kombination aus Drossel und Rückschlagventil 6 ausgerüstet, über das diese mit der jeweiligen Hydraulikleitung 2,3 verbunden ist. Ist der Druck in der jeweils zugeordneten Hydraulikleitung 2,3 geringer als in dem Hochdruckbehälter 4 beziehungsweise dem Niederdruckbehälter 5, tritt Hydraulikflüssigkeit aus dem jeweiligen Druckbehälter 4,5 aus und wird dem System zur Verfügung gestellt. Auf diese Weise wird einem Mangel an Hydraulikflüssigkeit entgegengewirkt. Der Hochdruckkreis 2 und der Niederdruckkreis 3 sind über ein analoges Schieberregelventil 7 als Bremsventil mit einem Bremsaktor 8 verbunden, der einen Bremszylinder 9 aufweist. Der Bremszylinder 9 ist durch einen Bremskolben 10 in eine Bremskammer 11 sowie eine Bremsrückholkammer 12 unterteilt. Vom Druckkolben 10 erstreckt sich eine Kopplungsstange 13 als Kopplungsglied zu einem Bremsbelag 14, der zum Andrücken an eine Bremsscheibe 15 vorgesehen ist. In der Figur 1 sind die Bremsscheibe 15 und der Bremsbelag 14 sowohl in einer Draufsicht als auch in einer Seitenansicht gezeigt.

In der in Figur 1 oben gezeigten Darstellung ist erkennbar, dass der Bremsbelag 14 über Abstützmittel 16, wie beispielsweise eine einfache Stange oder eine beliebige andere Hebelmechanik mit dem Abstützkolben 17 eines Druckgebers 18 verbunden ist. Der Druckgeber 18 weist neben dem Abstützkolben 17 einen Abstützzylinder 19 auf. Der Abstützkolben 17 teilt den Abstützzylinder 19 in eine Abstützkammer 20 sowie in eine Abstützrückholkammer 21. In der Abstützkammer 20 und in der Abstützrückholkammer 21 sind jeweils Druckfedern 22 angeordnet.

Der Bremsbelag 14 ist tangential zur Drehrichtung der Drehscheibe 15 beweglich gelagert und daher an dem an einem Fahrgestell eines Schienenfahrzeugs befestigten Druckgeber abgestützt.

Die Abstützkammer 20 und die Abstützrückholkammer 21 sind jeweils über zweckmäßige Hydraulikleitungen 23 beziehungsweise 24 mit dem Hochdruckkreis 2 beziehungsweise dem Niederdruckkreis 3 verbunden. Dabei kommunizieren die Hydraulikleitungen 23, 24 mit Rückschlagventilen 25 bis 28. Die in der Hydraulikleitung 24 der Abstützrückholkammer 21 angeordneten Rückschlagventile 25, 26 sind gegensinnig zueinander ausgerichtet. Herrscht in der Abstützrückholkammer 21 ein höherer Druck als im Niederdruckkreis 3, verschließt das Rückschlagventil 25 die Verbindung zwischen der Hydraulikleitung 24 und dem Niederdruckkreis 3. Ist hingegen der Druck in der Abstützrückholkammer 21 größer als der in dem Hochdruckkreis 2, öffnet das Rückschlagventil 26, so dass Fluid wie beispielsweise eine geeignete Hydraulikflüssigkeit aus der Abstützrückholkammer 21 verdrängt und in den Hochdruckbehälter 4 überführt wird. Ist der Druck in der Abstützrückholkammer 21 hingegen niedriger als im Niederdruckkreis 3, öffnet das Ventil 25, so dass ein Zufluss von Hydraulikflüssigkeit aus dem Niederdruckbehälter 5 in die Abstützrückholkammer 21 ermöglicht ist. Entsprechendes gilt für das Zusammenwirken der Abstützkammer 20 und den Rückschlagventilen 27, 28 über die Hydraulikleitung 23.

In Figur 1 ist ferner ein Druckgeberrückstellventil 29 erkennbar, das über Hydraulikleitungen 30 und 31 mit der Abstützkammer 20 beziehungsweise der Abstützrückholkammer 21 kommuniziert. Das Druckgeberrückstellventil 29 verfügt über ein Schiebeglied 32, das bei Bestätigung den Druckausgleich zwischen der Abstützkammer 20 und der Abstützrückholkammer 21 herbeiführt. Liegt ein Druckausgleich vor, verschieben die Druckfedern 22 den Abstützkolben 17 wieder in die in Figur 1 gezeigte Mittelstellung. Auf diese Weise wird vermieden, dass der Abstützkolben 17 gegen eine Begrenzung des Abstützzylinders 19 verschoben und somit die Bremsverstärkung unterbrochen wird. Zum Bestätigen des Druckgeberrückstellventils 29 dient eine zweckmäßige Druckausgleichsteuereinheit 33. Die Betätigung erfolgt beispielsweise über elektromagnetische Kräfte.

Die Druckausgleichsteuereinheit 33 wirkt ferner auf ein Ventil 34 ein, das ein bewusstes Abkoppeln des Speichers 4 aus dem Hochdruckkreis 2 beispielsweise zur Reduktion des Abstützkolbenwegs oder zu Wartungszwecken ermöglicht. Das Ventil 34 ist im Normalbetrieb geöffnet.

Die Hydraulikleitungen 23 und 24 sind jeweils mit geeichten figürlich nicht dargestellten Druck-Spannungsumsetzern versehen. Jeder Druck-Spannungsumsetzer stellt eine dem Druck in der Abstützkammer 20 beziehungsweise in der Abstützrückholkammer 21 proportionale Spannung an seinem Ausgang bereit. Der Ausgang jedes Druck-Spannungsumsetzers liegt an dem Eingang eines Differenzbildners 35 an. Der Differenzbildner 35 ist ausgangsseitig mit einem Betragsbildner 36 verbunden, der aus der vom Differenzbildner 35 bereitgestellten Druckdifferenz Δp den Betrag |Δp| berechnet. Der Betrag der Druckdifferenz |Δp| wird schließlich an den Eingang eines Vergleichers 37 gelegt. Am zweiten Eingang des Vergleichers 37 liegt eine Solldruckdifferenz Δpₛₒₗₗ als Sollwert an, die ausgehend von einer Sollkraft Fₛₒₗₗ und in Abhängigkeit eines vorgegebenen Flächenfaktors 38 berechnet wird. Die Sollkraft Fₛₒₗₗ wird mittels einer zweckmäßigen Steuerungseinheit 39 durch einen Benutzer der Vorrichtung eingegeben. Der Vergleicher 37 erzeugt an seinem Ausgang einen Differenzwert ΔF, der an dem Eingang einer Regeleinheit 40 anliegt, die anschließend ein Verschiebelement 41 des Bremsventils 7 so verschiebt, dass der Differenzwert ΔF minimiert wird. Das Bremsventil 7 ist beispielsweise ein Proportionalventil.

Zum Andrücken des Bremsbelages 14 an die Bremsscheibe 15 dient eine Vorspannfeder 45. Die Vorspannfeder 45 drückt den Bremsbelag gegen die Bremsscheibe, falls sich hydraulisch keine Andruckkraft erzeugen lässt.

Die Wirkungsweise der erfindungsgemäßen Vorrichtung 1 ist wie folgt: Zum Einleiten eines Bremsvorganges wird eine Sollkraft Fₛₒₗₗ über die Regelungsmittel 42 angefordert. Die Regelungsmittel 42 umfassen die Steuerungseinheit 39, die figürlich nicht dargestellten Messsensoren, den Differenzbildner 35, den Betragsbildner 36, den Flächenfaktorbilder 38, den Vergleicher 37, die Regeleinheit 40 und das Bremsventil 7. Die Druckdifferenz Δp zwischen der Abstützkammer 20 und der Abstützrückholkammer 21 ist zu Beginn der Bremsung gleich null, so dass ein großer Differenzwert ΔF durch den Vergleicher 37 erzeugt wird. Die Regeleinheit 40 verschiebt anschließend das Verschiebelement 41 nach links, so dass ein großer Druckunterschied zwischen der Bremskammer 11 und der Bremsrückholkammer 12 erzeugt wird. Dabei ist der Druck in der Bremskammer 11 höher als in der Bremsrückholkammer 12. Es kommt zu einem Verschieben des Bremskolbens 10 und somit zum Einleiten einer Andruckkraft F_{N} in der mit den Pfeilen angedeuteten Richtung auf die Bremsscheibe 5. Durch den Reibschluss zwischen Bremsbelag und Bremsscheibe wird eine tangential zur Drehrichtung der Bremsscheibe gerichtete Reibkraft oder mit anderen Worten eine Verzögerungskraft Fᵢₛₜ erzeugt. Die Verzögerungskraft Fᵢₛₜ wird aufgrund der beweglichen Lagerung des Bremsbelages 14 über die Verbindungsmittel 16, also die Hebelmechanik, in den Abstützkolben 17 eingeleitet. Der Abstützkolben 17 wird bei einer Drehung der Bremsscheibe 15 im Uhrzeigersinn aus der in Figur 1 gezeigten Stellung nach rechts verschoben. In der Abstützkammer 20 erhöht sich daher der Druck der Hydraulikflüssigkeit gegenüber dem Druck der Hydraulikflüssigkeit in der Abstützrückholkammer 21. Die Drücke werden jeweils durch die Druck-Spannungsumsetzer erfasst und an den Eingang des Differenzbildners 35 gelegt. Dies führt am Ausgang des Differenzbildners 35 zu einer Druckdifferenz Δp und somit zu einem entsprechenden Betrag |Δp| oder Absolutwert am Ausgang des Betragsbildners 36. Der Differenzwert ΔF verkleinert sich, wobei die Regelungseinheit 40 im weiteren Verlauf der Regelung dafür sorgt, dass der Differenzwert ΔF schließlich minimiert wird. Mit anderen Worten ist erfindungsgemäß eine Selbstverstärkung und eine gleichzeitige Regelung der Bremskraft bereitgestellt.

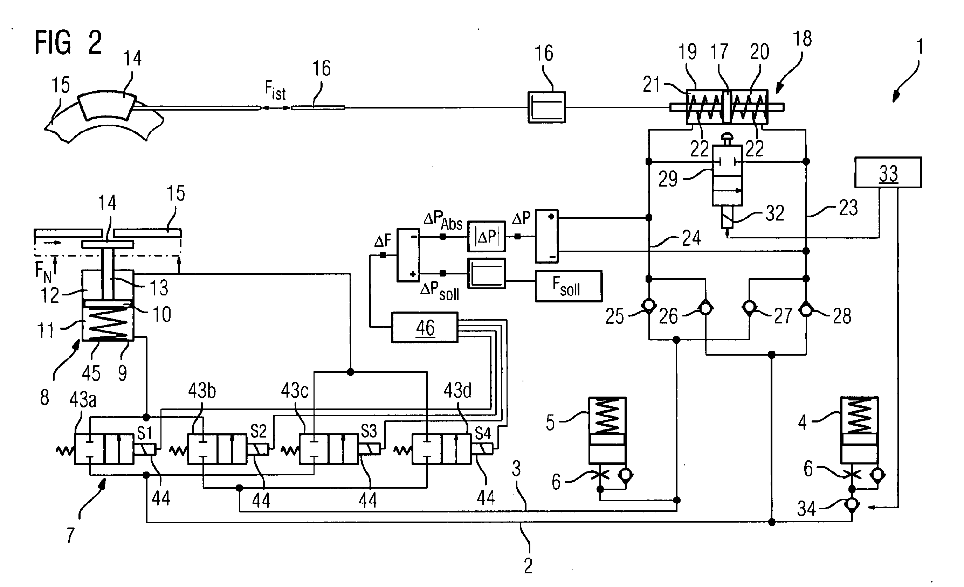

Das Ausführungsbeispiel gemäß Figur 2 unterscheidet sich von dem in Figur 1 gezeigten Ausführungsbeispiel im Wesentlichen durch die Ausgestaltung des Bremsventils 7. In Figur 2 weist das Bremsventil 7 eine Vielzahl von Schaltventilen 43a, 43b, 43c und 43d auf, die jeweils lediglich über zwei Schaltstellungen verfügen. Dabei dient ein Verschiebelement 44 jedes Schaltventils 43a...43d zur Auswahl der jeweiligen Schaltstellung. In der ersten Schaltstellung ist die Verbindung zwischen dem Eingang und dem Ausgang des Schaltventils 43 unterbrochen. In einer zweiten Schaltstellung liegt der Eingangsdruck jedes Schaltventils 43a...43d auch ausgangsseitig an. Die Schaltventile 43a und 43c sind mit dem Hochdruckkreis 2, die Schaltventile 43b und 43d mit dem Niederdruckkreis 3 verbunden. Wird das Ventil 43a beispielsweise in seine Durchgangsstellung überführt, liegt am Ausgang des Schaltventils 43a der Druck des Hochdruckkreises 2 an. Mit anderen Worten kommuniziert die Bremskammer 11 mit dem Hochdruckkreis 2. Wird durch Verschieben des Verschiebelementes 44 des Schaltventils 43d in seine Durchgangsstellung in der Bremsrückholkammer 12 der Druck des Niederdruckkreises 3 angelegt, ist die durch den Bremsaktor 18 erzeugte Druckdifferenz und somit die Bremskraft am größten.

Die restlichen Regelungsmittel 42 unterscheiden sich von den in Figur 1 gezeigten Regelungsmitteln 42 lediglich durch einen digitalen Regler 46, der als solcher dem Fachmann bekannt, so dass an dieser Stelle darauf nicht eingegangen zu werden braucht. Der digitale Regler 46 ist zum Verschieben des Verschiebungselementes 44 jedes Schaltventils im Millisekundentakt eingerichtet. Dabei dient eine entsprechende Logik, die in der digitalen Steuerung abgelegt ist, zum Herbeiführen der gewünschten Bremsregelung. Durch das kurzzeitige Schalten können nahezu beliebige Druckdifferenzen im Bremszylinder 8 erzeugt werden.

## Patentansprüche

1. Vorrichtung (1) zum Bremsen einer bewegten Masse mit
- einem beweglich geführten Kopplungsglied (13) zum Andrücken eines Bremsbelages (14) an eine Bremsfläche (15) und
- einem mit Hydraulikflüssigkeit befüllten und mit dem Kopplungsglied (13) verbundenen Bremsaktor (8) zum Erzeugen einer Andruckkraft, die über das Kopplungsglied (13) in den Bremsbelag (14) einleitbar ist,
- wobei der Bremsbelag (14) über Verbindungsmittel (16) mit einem an einem Gestell der zu bremsenden Masse befestigbaren Druckgeber (18) verbunden ist, der einen mit Hydraulikflüssigkeit befüllten Abstützzylinder (19) und einen mit diesem zusammenwirkenden Abstützkolben (17) aufweist,
- wobei der Abstützzylinder (19) über Hydraulikleitungen (2,3) mit dem Bremszylinder (9) kommuniziert und
- wobei Regelungsmittel (42) eine Bremskraft in Abhängigkeit eines vorgegebenen Sollwerts einstellen,
**dadurch gekennzeichnet, dass**
der Abstützzylinder (19) durch den Abstützkolben (17) in eine Abstützkammer (20) und eine Abstützrückholkammer (21) unterteilt ist, wobei die Regelungsmittel (42) zum Regeln des Druckunterschiedes zwischen dem Hydraulikdruck in der Abstützkammer (20) und dem Hydraulikdruck in der Abstützrückholkammer (21) eingerichtet sind.

2. Vorrichtung (1) nach Anspruch 1,
**dadurch gekennzeichnet, dass**
der Bremsbelag (14) über die Verbindungsmittel (16) mit dem Abstützzylinder (19) verbunden und der Abstützkolben (17) an einem Gestell der zu bremsenden Masse befestigt ist.

3. Vorrichtung (1) nach Anspruch 1,
**dadurch gekennzeichnet, dass**
der Bremsbelag (14) über die Verbindungsmittel (16) mit dem Abstützkolben (17) verbunden und der Abstützzylinder (19) am Gestell befestigt ist.

4. Vorrichtung (1) nach einem der vorhergehenden Ansprüche,
**gekennzeichnet durch**
Druckfedern (22), die in dem Abstützzylinder (19) angeordnet sind.

5. Vorrichtung (1) nach Anspruch 4,
**dadurch gekennzeichnet, dass**
in der Abstützkammer (20) und in der Abstützrückholkammer (21) Druckfedern (22) vorgesehen sind, wobei ein Druckgeberrückstellventil (29) zum Druckausgleich zwischen der Abstützkammer (20) und der Abstützrückholkammer (21) vorgesehen ist und wobei eine Steuerungseinheit (33) den Druckausgleich durch das Druckgeberrückstellventil (29) und die Druckfedern (22) einleitet.

6. Vorrichtung (1) nach einem der vorhergehenden Ansprüche,
**dadurch gekennzeichnet, dass**
die Regelungsmittel (42)
- Druckerfassungsmittel (35, 36) zum Erfassen eines Druckdifferenzwertes Δp als Ist-Wert,
- einen Vergleicher (37), der einen vorgegebenen Soll-Wert mit dem Ist-Wert unter Gewinnung eines Differenzwertes ΔF vergleicht,
- eine Regelungseinheit (40) und
- ein Bremsventil (7) zum Einstellen des Drucks der Hydraulikflüssigkeit in dem Bremsaktor (8) umfassen,
- wobei die Reglungseinheit (40) so auf das Bremsventil (7) wirkt, dass der Differenzwert ΔF minimiert wird.

7. Vorrichtung (1) nach Anspruch 6,
**dadurch gekennzeichnet, dass**
das Bremsventil (7) mit einem fluidischen Hochdruckkreis (3) und einem fluidischen Niederdruckkreis (2) kommuniziert.

8. Vorrichtung (1) nach Anspruch 6 oder 7,
**dadurch gekennzeichnet, dass**
das Bremsventil ein analoges Schieberventil (7) und die Regelungseinheit (40) ein Analogregler oder ein digitaler Regler mit analogem oder pulsmoduliertem Ausgang ist.

9. Vorrichtung (1) nach Anspruch 6 oder 7,
**dadurch gekennzeichnet, dass**
das Bremsventil (7) eine Reihe von Schaltventilen (43a, 43b, 43c, 43d) mit zwei Schaltstellungen umfasst, wobei die Regeleinheit eine digitale Regeleinheit (46) oder eine analoge Regeleinheit mit digitalem Umsetzer ist.

10. Vorrichtung (1) nach einem der vorhergehenden Ansprüche,
**dadurch gekennzeichnet, dass**
das Kopplungsglied (13) eine Hebelmechanik umfasst.

11. Vorrichtung (1) nach einem der vorhergehenden Ansprüche,
**dadurch gekennzeichnet, dass**
der Bremsaktor (8) einen mit Hydraulikflüssigkeit befüllten Bremszylinder (9) und einen Bremskolben (10) aufweist, die relativ zueinander beweglich sind.

12. Vorrichtung (1) nach Anspruch 11,
**dadurch gekennzeichnet, dass**
der Bremskolben (10) mit dem Kopplungsglied (13) verbunden ist.

13. Vorrichtung (1) nach Anspruch 11 oder 12,
**dadurch gekennzeichnet, dass**
der Bremszylinder (9) durch den Bremskolben (10) in eine Bremskammer (11) und eine Bremsrückholkammer (12) unterteilt ist.

14. Vorrichtung (1) nach Anspruch 13,
**dadurch gekennzeichnet, dass**
das Kopplungsglied (13) eine Bremsstange umfasst, die sich durch die Bremsrückholkammer (12) erstreckt.

15. Vorrichtung (1) nach einem der vorhergehenden Ansprüche,
**gekennzeichnet durch**
eine Vorspannfeder zum Andrücken des Bremsbelags an die Bremsfläche.

16. Vorrichtung (1) nach einem der vorhergehenden Ansprüche,
**gekennzeichnet durch**
einen Hochdruckbehälter (5) und einen Niederdruckbehälter (4) zum Bereitstellen von Hydraulikflüssigkeit.

## Claims

1. Device (1) for decelerating a moving mass, comprising
- a movably guided coupling element (13) for pressing a brake lining (14) against a braking surface (15), and
- a brake actuator (8) which is filled with hydraulic fluid, is connected to the coupling element (13) and has the purpose of generating a pressing-on force which can be applied to the brake lining (14) via the coupling element (13),
- wherein the brake lining (14) is connected via connecting means (16) to a pressure transducer (18) which can be attached to a frame of the mass to be decelerated and which has a supporting cylinder (19) which is filled with hydraulic fluid and a supporting piston (17) which interacts with said supporting cylinder (19),
- wherein the supporting cylinder (19) communicates with the brake cylinder (9) via hydraulic lines (2, 3),and
- wherein regulating means (42) set a braking force as a function of a predefined setpoint value,
**characterized in that** the supporting cylinder (19) is divided into a supporting chamber (20) and a supporting return chamber (21) by the supporting piston (17), wherein the regulating means (42) are configured to regulate the difference in pressure between the hydraulic pressure in the supporting chamber (20) and the hydraulic pressure in the supporting return chamber (21).

2. Device (1) according to Claim 1,
**characterized in that** the brake lining (14) is connected to the supporting cylinder (19) via the connecting means (16), and the supporting piston (17) is attached to a frame of the mass to be decelerated.

3. Device (1) according to Claim 1,
**characterized in that** the brake lining (14) is connected to the supporting piston (17) via the connecting means (16), and the supporting cylinder (19) is attached to the frame.

4. Device (1) according to one of the preceding claims,
**characterized by** compression springs (22) which are arranged in the supporting cylinder (19).

5. Device (1) according to Claim 4,
**characterized in that** compression springs (22) are provided in the supporting chamber (20) and in the supporting return chamber (21), wherein a pressure transducer return valve (29) is provided for equalizing the pressure between the supporting chamber (20) and the supporting return chamber (21), and wherein a control unit (33) initiates the pressure equalization by means of the pressure transducer return valve (29) and the compression springs (22).

6. Device (1) according to one of the preceding claims, **characterized in that** the regulating means (42) comprise
- pressure detection means (35, 36) for detecting a pressure difference value Δp as an actual value,
- a comparator (37) which compares a predefined setpoint value with the actual value by acquiring a difference value ΔF,
- a regulating unit (40) and
- a brake valve (7) for setting the pressure of the hydraulic fluid in the brake actuator (8),
- wherein the regulating unit (40) acts on the brake valve (7) in such a way that the difference value ΔF is minimized.

7. Device (1) according to Claim 6,
**characterized in that** the brake valve (7) communicates with a fluidic high pressure circuit (3) and a fluidic low pressure circuit (2).

8. Device (1) according to Claim 6 or 7,
**characterized in that** the brake valve is in an analog slider valve (7) and the regulating unit (40) is an analog regulator or a digital regulator with an analog or pulse-modulated output.

9. Device (1) according to Claim 6 or 7,
**characterized in that** the brake valve (7) comprises a series of switching valves (43a, 43b, 43c, 43d) with two switched positions, wherein the regulating unit is a digital regulating unit (46) or an analog regulating unit with a digital converter.

10. Device (1) according to one of the preceding claims,
**characterized in that** the coupling element (13) comprises a lever mechanism.

11. Device (1) according to one of the preceding claims,
**characterized in that** the brake actuator (8) has a brake cylinder (9) which is filled with hydraulic fluid and a brake piston (10), which brake cylinder (9) and brake piston (10) can move relative to one another.

12. Device (1) according to Claim 11,
**characterized in that** the brake piston (10) is connected to the coupling element (13).

13. Device (1) according to Claim 11 or 12,
**characterized in that** the brake cylinder (9) is divided into a braking chamber (11) and a braking return chamber (12) by the brake piston (10).

14. Device (1) according to Claim 13,
**characterized in that** the coupling element (13) comprises a brake rod which extends through the braking return chamber (12).

15. Device (1) according to one of the preceding claims,
**characterized by** a prestressing spring for pressing the brake lining against the braking surface.

16. Device (1) according to one of the preceding claims,
**characterized by** a high pressure vessel (5) and a low pressure vessel (4) for making available hydraulic fluid.

## Revendications

1. Dispositif ( 1 ) de freinage d'une masse en déplacement, comprenant
- un élément ( 13 ) d'accouplement guidé de manière mobile pour repousser une garniture ( 14 ) de frein sur une surface ( 15 ) de frein et
- un actionneur ( 8 ) de frein empli de liquide hydraulique et relié à l'élément ( 13 ) d'accouplement pour la production d'une force de poussée, qui peut être appliquée à la garniture ( 14 ) de frein par l'intermédiaire de l'élément ( 13 ) d'accouplement,
- dans lequel la garniture ( 14 ) de frein est reliée par des moyens ( 16 ) de liaison à un transmetteur ( 18 ) de pression, qui peut être fixé à un bâti de la masse à freiner et qui a un cylindre ( 19 ) d'appui empli de liquide hydraulique et un piston ( 17 ) d'appui coopérant avec celui-ci,
- dans lequel le cylindre ( 19 ) d'appui communique avec le cylindre ( 9 ) de frein par des conduits ( 2, 3 ) hydrauliques et
- dans lequel des moyens ( 42 ) de réglage règlent une force de freinage en fonction d'une valeur de consigne donnée à l'avance,
**caractérisé en ce que**
le cylindre ( 19 ) d'appui est subdivisé par le piston ( 17 ) d'appui en une chambre ( 20 ) d'appui et en une chambre ( 21 ) de rappel d'appui, les moyens ( 42 ) de réglage étant conçus pour régler la différence de pression entre la pression hydraulique dans la chambre ( 20 ) d'appui et la pression hydraulique dans la chambre ( 21 ) de rappel d'appui.

2. Dispositif ( 1 ) suivant la revendication 1,
**caractérisé en ce que**
la garniture de frein est reliée au cylindre ( 19 ) d'appui par les moyens ( 16 ) de liaison et le piston ( 17 ) d'appui est fixé à un bâti de la masse à freiner.

3. Dispositif ( 1 ) suivant la revendication 1,
**caractérisé en ce que**
la garniture ( 14 ) de frein est reliée au piston ( 17 ) d'appui par les moyens ( 16 ) de liaison et le cylindre ( 19 ) d'appui est fixé au bâti.

4. Dispositif ( 1 ) suivant l'une des revendications précédentes,
**caractérisé par**
des ressorts ( 22 ) de compression, qui sont montés dans le cylindre ( 19 ) d'appui.

5. Dispositif ( 1 ) suivant la revendication 4,
**caractérisé en ce que**
des ressorts ( 22 ) de compression sont prévus dans la chambre ( 20 ) d'appui et dans la chambre ( 21 ) de rappel d'appui, une vanne ( 29 ) de rappel de transmetteur de pression étant prévue pour égaliser la pression entre la chambre ( 20 ) d'appui et la chambre ( 21 ) de rappel d'appui, et dans lequel une unité ( 33 ) de commande fait commencer la compensation de pression par la vanne ( 29 ) de rappel de transmetteur de pression et par les ressorts ( 22 ) de compression.

6. Dispositif ( 1 ) suivant l'une des revendications précédentes,
**caractérisé en ce que**
les moyens ( 42 ) de réglage comprennent
- des moyens ( 35, 36 ) de détection de la pression pour détecter une valeur Δp de différence de pression en tant que valeur réelle,
- un comparateur ( 37 ) qui compare une valeur de consigne donnée à l'avance à la valeur réelle en obtenant une valeur ΔF de différence,
- une unité ( 40 ) de réglage et
- une vanne ( 7 ) de frein pour régler la pression du liquide hydraulique dans l'actionneur ( 8 ) de frein,
- dans lequel l'unité ( 40 ) de réglage agit sur la vanne ( 7 ) de frein, de manière à minimiser la valeur ΔF de la différence.

7. Dispositif ( 1 ) suivant la revendication 6,
**caractérisé en ce que**
la vanne ( 7 ) de frein communique avec un circuit ( 3 ) fluidique haute pression et avec un circuit ( 2 ) fluidique basse pression.

8. Dispositif ( 1 ) suivant la revendication 6 ou 7,
**caractérisé en ce que**
la vanne de frein est une vanne ( 7 ) analogique à tiroir et l'unité ( 40 ) de réglage est un régleur analogique ou un régleur numérique à sortie analogique ou en mode pulsé.

9. Dispositif ( 1 ) suivant la revendication 6 ou 7,
**caractérisé en ce que**
la vanne ( 7 ) de frein comprend une série de vannes ( 43a, 43b, 43c, 43d ) pilotes ayant deux positions de commutation, l'unité de réglage étant une unité ( 46 ) de réglage numérique ou une unité de réglage analogique à convertisseur numérique.

10. Dispositif ( 1 ) suivant l'une des revendications précédentes,
**caractérisé en ce que**
l'élément ( 13 ) d'accouplement comprend une mécanique à levier.

11. Dispositif ( 1 ) suivant l'une des revendications précédentes,
**caractérisé en ce que**
l'actionneur ( 8 ) de frein a un cylindre ( 9 ) de frein empli de liquide hydraulique et un piston ( 10 ) de frein, qui sont mobiles l'un par rapport à l'autre.

12. Dispositif ( 1 ) suivant la revendication 11,
**caractérisé en ce que**
le piston ( 10 ) de frein est relié à l'élément ( 13 ) d'accouplement.

13. Dispositif ( 1 ) suivant la revendication 11 ou 12,
**caractérisé en ce que**
le cylindre ( 9 ) de frein est subdivisé par le piston ( 10 ) de frein en une chambre ( 11 ) de frein et en une chambre ( 12 ) de rappel de frein.

14. Dispositif ( 1 ) suivant la revendication 13,
**caractérisé en ce que**
l'élément ( 13 ) d'accouplement comprend une barre de frein, qui s'étend dans la chambre ( 12 ) de rappel de frein.

15. Dispositif ( 1 ) suivant l'une des revendications précédentes,
**caractérisé par**
un ressort de précontrainte pour repousser la garniture de frein sur la surface de frein.

16. Dispositif ( 1 ) suivant l'une des revendications précédentes,
**caractérisé par**
un réservoir ( 5 ) de haute pression et un réservoir ( 4 ) de basse pression pour la mise à disposition du liquide hydraulique.
